# EUROPEAN PATENT SPECIFICATION

(11) **EP 4 020 903 B1**
(45) Date of publication and mention of the grant of the patent: **31.07.2024**
(21) Application number: 20864927.7
(22) Date of filing: 29.06.2020
(51) Int. Cl.: H04L 12/46, H04L 45/02, H04L 45/50, H04L 45/74

(54) **METHOD AND APPARATUS FOR PREVENTING TRAFFIC BYPASSING**
VERFAHREN UND VORRICHTUNG ZUR VERMEIDUNG VON VERKEHRSUMLEITUNGEN
PROCÉDÉ ET APPAREIL PERMETTANT D'EMPÊCHER UNE DÉRIVATION DE TRAFIC

(30) Priority: 16.09.2019 CN 201910871043
(43) Date of publication of application: 29.06.2022
(73) Proprietor: ZTE Corporation, Shenzhen, Guangdong 518057 (CN)
(72) Inventor: ZHANG, Yuetong, Nanjing, Jiangsu 210012 (CN)
(74) Representative: WBH Wachenhausen Patentanwälte PartG mbB
(86) International application number: PCT/CN2020/099022
(87) International publication number: WO 2021/051935

(56) References cited:
- CN-A- 107 124 347
- CN-A- 107 342 941
- CN-A- 108 306 825
- CN-A- 108 322 376
- CN-A- 108 924 052
- CN-A- 109 729 010
- US-A1- 2017 373 973
- SAJASSI A ET AL: "Integrated Routing and Bridging in EVPN; draft-ietf-bess-evpn-inter-subnet-forwarding-08.txt", no. 8, 5 March 2019 (2019-03-05), pages 1 - 33, XP015131394, Retrieved from the Internet <URL:https://tools.ietf.org/html/draft-ietf-bess-evpn-inter-subnet-forwarding-08> [retrieved on 20190305]
- RABADAN J ET AL: "IP Prefix Advertisement in EVPN; draft-ietf-bess-evpn-prefix-advertisement-11.txt", IP PREFIX ADVERTISEMENT IN EVPN; DRAFT-IETF-BESS-EVPN-PREFIX-ADVERTISEMENT-11.TXT; INTERNET-DRAFT: BESS WORKGROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 11, 18 May 2018 (2018-05-18), pages 1 - 36, XP015126445

## Description

### TECHNICAL FIELD

The present disclosure relates to the technical field of communications, and more particularly, to a method and apparatus for preventing traffic detour.

### BACKGROUND

An Ethernet Virtual Private Network (EVPN) is a layer-2 networking Virtual Private Network (VPN) technology, which may be based on Virtual Extensible Local Area Network (VXLAN) tunneling, Multi-Protocol Label Switching (MPLS), or Provider Backbone Bridge (PBB). In the EVPN technology, Media Access Control (MAC)/Address Rescheme Protocol (ARP)/route information between layer-2 networks is transmitted by establishing MultiProtocol-Border Gateway Protocol (MP-BGP) neighbors, and a layer-2 or layer-3 message is forwarded through a generated address forwarding entry. That is, transfer of MAC/ARP/routes and other entries does not depend on a data plane, but is performed through an EVPN control plane.

US20170373973A1 relates to a provider edge device provides L2 virtual bridge connectivity for at least one customer network using an EVPN instance and L3 routing using an IRB interface that is a L3 routing interface assigned to the EVPN instance; the provider edge device obtains an indication of a new binding for an endpoint device of the at least one customer network, the new binding comprising a first L2 address and a L3 address that are assigned to the endpoint device; and the provider edge device outputs, in response to determining the provider edge device stores a prior binding for the endpoint device of a second L2 address and the L3 address that are assigned to the endpoint device, an EVPN route comprising an indication of the new binding and an indication the new binding is an updated binding of the prior binding for the endpoint device.

CN108306825A relates to an equivalent forwarding item generation method. The equivalent forwarding item generation method is applied to VTEP (Virtual Extensible LAN Tunnel End Point) devices in EVPN (Ethernet Virtual Private Network). The equivalent forwarding item generation method includes the steps: receiving a plurality of ES (Ethernet Segment) routes; if determining that each of the plurality of ES routes includes a next hop of reachable fields and the plurality of ES routes include the same ESI (Ethernet Segment Identifier), determining to send IP addresses of a plurality of opposite-end VTEP devices of the plurality of ES routes, and generating an equivalent next-hop item containing the same ESI and the IP addresses of the plurality of opposite-end VTEP devices; and when the ESI in a received MAC(Medium Access Control)/IP(Internet Protocol) advertisement route matches the ESI in the generated equivalent next-hop item, generating an equivalent forwarding item taking the terminal address in the MAC/IP advertisement route as the matching item and taking a destination address as the outcoming interface of a VXLAN tunnel of the plurality of opposite-end VTEP devices. The equivalent forwarding item generation method does not need depending on an IP prefix gateway or EVPN routs of other types to issue the equivalent forwarding item.

A VXLAN Tunnel End Point (VTEP) is configured for encapsulating and decapsulating VXLAN messages, including ARP request messages and normal VXLAN data messages. The VTEP at one end encapsulates a message and then sends the message to the VTEP at the other end through a tunnel. The VTEP at the other end receives the message, decapsulates the message, and then forwards the message based on an encapsulated MAC address. The VTEP may be implemented by a hardware device or software that supports the VXLAN.

In a scenario where an Integrated Routing and Bridge (IRB) interface is deployed at a gateway device, in case of communication across access rings, the gateway advertises only an IP network segment route, but does not advertise a detailed IP route of a host in the access ring.

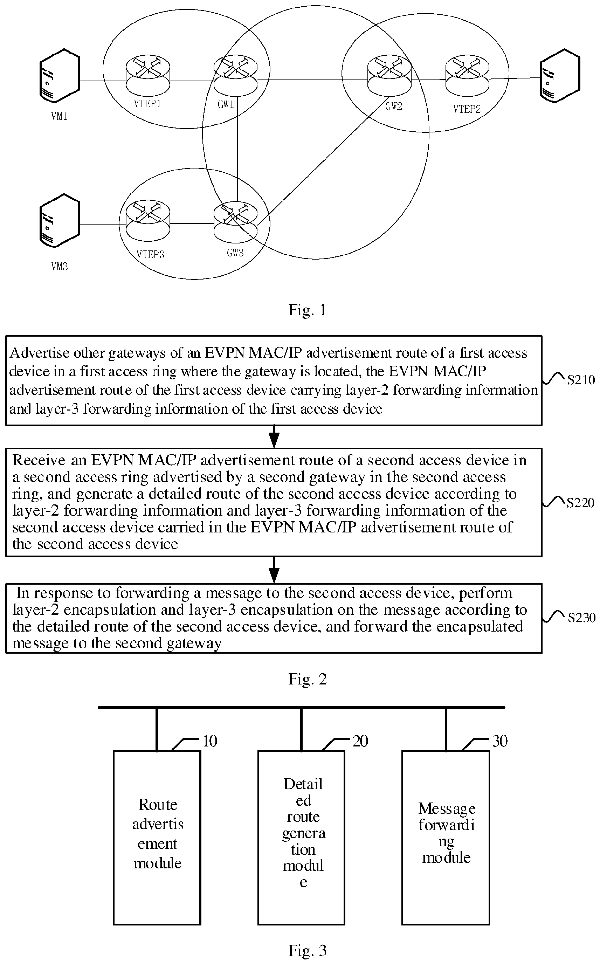

In a network scenario of communication across the access rings shown in FIG. 1, a first VXLAN tunnel end point (VTEP1) and a first gateway (GW1) belong to a first access ring (access ring 1). A first IRB (IRB1) interface is deployed at a first gateway. A first access device (virtual machine 1 (VM1)) accesses the first access ring. A second VXLAN tunnel end point (VTEP2) and a second gateway (GW2) belong to a second access ring (access ring 2). A second IRB (IRB2) interface is deployed at a second gateway. A second access device (virtual machine 2 (VM2)) accesses the second access ring. A third VXLAN tunnel end point (VTEP3) and a third gateway (GW3) belong to a third access ring (access ring 3). A third IRB (IRB3) interface is deployed at a third gateway. A third access device (virtual machine 3 (VM3)) accesses the third access ring. GW1, GW2 and GW3 belong to the same core ring. An access ring is a network established by devices at an access layer and an aggregation layer through annular networking. A core ring is a network established by devices at a core layer and an aggregation layer through annular networking. The aggregation layer is located between the access layer and the core layer and acts as a communication bridge between the access layer and the core layer.

A first VXLAN tunnel is between GW1 and VTEP1, a second VXLAN tunnel is between GW2 and VTEP2, and a third VXLAN tunnel is between GW3 and VTEP3.

GW1 advertises GW2 and GW3 of a first EVPN MAC/Internet Protocol (IP) advertisement route, which carries layer-3 forwarding information of IRB1. GW3 advertises GW1 and GW2 of a third EVPN MAC/IP advertisement route, which carries layer-3 forwarding information of IRB3. The layer-3 forwarding information carried in the first EVPN MAC/IP advertisement route may generate a network segment routing entry with a 24-bit mask on GW2. The layer-3 forwarding information carried in the third EVPN MAC/IP advertisement route may also generate a network segment routing entry with a 24-bit mask on GW2. Assuming that VM1, VM3, IRB1 and IRB3 reside on the same network segment and that IRB3 and IRB1 have the same IP address, when VM2 in the second access ring sends a message to VM3 in the third access ring, GW2 queries for a routing forwarding entry of the network segment where VM3 resides. A route forwarded by GW1 and a route forwarded by GW3 are queried. A routing entry with the highest routing priority is selected from the routes on the same network segment according to routing priorities. Assuming that the priority of the route forwarded by GW1 is higher than the priority of the route forwarded by GW3, the next hop of the route from GW2 to the network segment is a layer-3 interface IRB1 of GW1. Therefore, GW2 sends the message sent to VM3 first to GW1. GW1 forwards the message to GW3 through layer-2 forwarding, and finally sends the message to VM3. Since traffic sent to VM3 in the third access ring is forwarded to GW3 in the third access ring by GW1 in the first access ring, a traffic detour occurs.

Therefore, in the existing technology, when communication is performed across access rings of an EVPN, a traffic detour occurs, which reduces transmission efficiency and increases consumption of network resources.

### SUMMARY

The present disclosure provides a method and apparatus for preventing traffic detour, which can prevent traffic detour when communication is performed across access rings of an EVPN and improve transmission efficiency.

The present invention is defined in the appended independent claims to which reference should be made. Advantageous features are set out in the appended dependent claims.

### BRIEF DESCRIPTION OF DRAWINGS

FIG. 1 is a schematic diagram of an architecture of Ethernet Virtual Private Network (EVPN) communication across access rings in the existing technology;
FIG. 2 is a flowchart of a method for preventing traffic detour according to Embodiment one of the present disclosure;
FIG. 3 is a schematic diagram of an apparatus for preventing traffic detour according to Embodiment two of the present disclosure;
FIG. 4 is a flowchart of a method for preventing traffic detour according to Example one of the present disclosure; and
FIG. 5 is a flowchart of a method for preventing traffic detour according to Example two of the present disclosure.

### DETAILED DESCRIPTION

### Embodiment one

As shown in FIG. 2, an embodiment of the present disclosure provides a method for preventing traffic detour, applied to a gateway of an Ethernet Virtual Private Network (EVPN). The method includes the following steps of S210, S220 and S230.

At S210, other gateways are advertised of an EVPN MAC/IP advertisement route of a first access device in a first access ring where the gateway is located, where the EVPN MAC/IP advertisement route of the first access device carries layer-2 forwarding information and layer-3 forwarding information of the first access device.

At S220, an EVPN MAC/IP advertisement route of a second access device in a second access ring advertised by a second gateway in the second access ring is received, and a detailed route of the second access device having more mask bits than a network segment route is generated according to layer-2 forwarding information and layer-3 forwarding information of the second access device carried in the EVPN MAC/IP advertisement route of the second access device.

At S230, when forwarding a message to the second access device, layer-2 encapsulation and layer-3 encapsulation are performed on the message according to the detailed route of the second access device, and the encapsulated message is forwarded to the second gateway.

The detailed route is a route having more mask bits than a network segment route. For example, the network segment route refers to a route with a 24-bit mask, while the detailed route refers to a route with a 32-bit mask. That is, compared with the network segment route, the detailed route matches more IP prefix bits and the matching is more accurate.

Prior to advertising to other gateways of the EVPN, an EVPN

MAC/IP advertisement route of a first access device in a first access ring of the gateway, the method further includes: receiving an EVPN MAC/IP advertisement route of the first access device advertised by a first VTEP of the first access ring. The EVPN MAC/IP advertisement route of the first access device carries the following information: MAC address information of the first access device carried in an MAC address field; IP address information of the first access device carried in an IP address field; layer-2 Virtual Extensible Local Area Network (VXLAN) identifier (VNI) information of the first access ring carried in an MPLS label 1 field; and IP address information of the first VTEP carried in a next-hop attribute.

Moreover, advertising to other gateways of the EVPN, an EVPN MAC/IP advertisement route of a first access device in a first access ring where the gateway is located includes: modifying the EVPN MAC/IP advertisement route of the first access device advertised by the first VTEP, and advertising to the other gateways of the EVPN, the modified EVPN MAC/IP advertisement route of the first access device. The modifying includes: modifying the MPLS label1 field to carry layer-2 VNI information of a core ring where the gateway is located; carrying layer-2 VNI information of the core ring where the gateway is located in an MPLS label2 field; modifying the next-hop attribute to carry IP address information of the gateway; and adding a "route MAC" extended attribute, and carrying the MAC address information of the first access device in the "route MAC" extended attribute.

In an embodiment, prior to advertising to other gateways of the EVPN, an EVPN MAC/IP advertisement route of a first access device in a first access ring where the gateway is located, the method further includes: receiving an EVPN MAC/IP advertisement route of the first access device advertised by a first VTEP of the first access ring. The EVPN MAC/IP advertisement route of the first access device carries the following information: MAC address information of the first access device carried in an MAC address field; IP address information of the first access device carried in an IP address field; layer-2 VXLAN identifier information of the first access ring carried in an MPLS label 1 field; layer-2 VXLAN identifier information of the first access ring carried in an MPLS label2 field; IP address information of the first VTEP carried in a next-hop attribute; and MAC address information of the first access device carried in a "route MAC" extended attribute.

In an embodiment, advertising to other gateways of the EVPN, an EVPN MAC/IP advertisement route of a first access device in a first access ring where the gateway is located includes: modifying the EVPN MAC/IP advertisement route of the first access device advertised by the first VTEP, and advertising to the other gateways of the EVPN, the modified EVPN MAC/IP advertisement route of the first access device. The modifying includes: modifying the MPLS label1 field to carry layer-2 VNI information of a core ring where the gateway is located; modifying an MPLS label2 field to carry layer-3 VNI information of the core ring where the gateway is located; modifying a value of a next-hop attribute to carry IP address information of the gateway; and modifying a value of a "route MAC" extended attribute to carry MAC address information of the gateway.

In an embodiment, carrying layer-2 forwarding information and layer-3 forwarding information of the second access device in the EVPN MAC/IP advertisement route of the second access device includes:
carrying an MAC address of the second access device in the MAC address field;
carrying an IP address of the second access device in the IP address field;
carrying layer-2 VNI information of a core ring where the second gateway is located in the MPLS label1 field;
carrying layer-2 VNI information of the core ring where the second gateway is located in the MPLS label2 field;
carrying IP address information of the second gateway in the next-hop attribute; and
carrying MAC address information of the second access device in the "route MAC" extended attribute.

In an embodiment, carrying layer-2 forwarding information and layer-3 forwarding information of the second access device in the EVPN MAC/IP advertisement route of the second access device includes:
carrying an MAC address of the second access device in the MAC address field;
carrying an IP address of the second access device in the IP address field;
carrying layer-2 VNI information of a core ring where the second gateway is located in the MPLS label1 field;
carrying layer-3 VNI information of the core ring where the second gateway is located in the MPLS label2 field;
carrying IP address information of the second gateway in the next-hop attribute; and
carrying MAC address information of the second gateway in the "route MAC" extended attribute.

### Embodiment two

As shown in FIG. 3, an embodiment of the present disclosure provides an apparatus for preventing traffic detour, applied to a gateway of an EVPN. The apparatus includes: a route advertisement module 10, a detailed route generation module 20 and a message forwarding module 30.

The route advertisement module 10 is configured to advertise to other gateways of the EVPN, an EVPN MAC/IP advertisement route of a first access device in a first access ring where the gateway is located, the EVPN MAC/IP advertisement route of the first access device carrying layer-2 forwarding information and layer-3 forwarding information of the first access device.

The detailed route generation module 20 is configured to receive an EVPN MAC/IP advertisement route of a second access device in a second access ring advertised by a second gateway in the second access ring, and generate a detailed route of the second access device having more mask bits than a network segment route according to layer-2 forwarding information and layer-3 forwarding information of the second access device carried in the EVPN MAC/IP advertisement route of the second access device.

The message forwarding module 30 is configured to, when forwarding a message to the second access device, perform layer-2 encapsulation and layer-3 encapsulation on the message according to the detailed route of the second access device, and forward the encapsulated message to the second gateway.
the apparatus further includes a first route advertisement receiving module 40. The first route advertisement receiving module is configured to receive an EVPN MAC/IP advertisement route of the first access device advertised by a first VTEP of the first access ring.

The EVPN MAC/IP advertisement route of the first access device carries the following information: MAC address information of the first access device carried in an MAC address field; IP address information of the first access device carried in an IP address field; layer-2 VNI information of the first access ring carried in an MPLS label1 field; and IP address information of the first VTEP carried in a next-hop attribute.
the route advertisement module is configured to advertise to the other gateways of the EVPN, the EVPN MAC/IP advertisement route of the first access device in the first access ring where the gateway is located in the following manner: modifying the EVPN MAC/IP advertisement route of the first access device advertised by the first VTEP, and advertising to the other gateways of the EVPN, the modified EVPN MAC/IP advertisement route of the first access device. The modifying includes: modifying the MPLS label1 field to carry layer-2 VNI information of a core ring where the gateway is located; carrying layer-2 VNI information of the core ring where the gateway is located in an MPLS label2 field; modifying the next-hop attribute to carry IP address information of the gateway; and adding a "route MAC" extended attribute, and carrying the MAC address information of the first access device in the "route MAC" extended attribute.

In an embodiment, the apparatus further includes: a second route advertisement receiving module 60. The second route advertisement receiving module is configured to receive an EVPN MAC/IP advertisement route of the first access device advertised by a first VTEP of the first access ring. The EVPN MAC/IP advertisement route of the first access device carries the following information: MAC address information of the first access device carried in an MAC address field; IP address information of the first access device carried in an IP address field; layer-2 VNI information of the first access ring carried in an MPLS label1 field; layer-2 VNI information of the first access ring carried in an MPLS label2 field; IP address information of the first VTEP carried in a next-hop attribute; and MAC address information of the first access device carried in a "route MAC" extended attribute.

In an embodiment, the route advertisement module is configured to advertise to the other gateways of the EVPN, the EVPN MAC/IP advertisement route of the first access device in the first access ring where the gateway is located in the following manner: modifying the EVPN MAC/IP advertisement route of the first access device advertised by the first VTEP, and advertising to the other gateways of the EVPN, the modified EVPN MAC/IP advertisement route of the first access device. The modifying includes: modifying the MPLS label1 field to carry layer-2 VNI information of a core ring where the gateway is located; modifying an MPLS label2 field to carry layer-3 VNI information of the core ring where the gateway is located; modifying a value of a next-hop attribute to carry IP address information of the gateway; and modifying a value of a "route MAC" extended attribute to carry MAC address information of the gateway.

In an embodiment, carrying layer-2 forwarding information and layer-3 forwarding information of the second access device in the EVPN MAC/IP advertisement route of the second access device includes:
carrying an MAC address of the second access device in the MAC address field;
carrying an IP address of the second access device in the IP address field;
carrying layer-2 VNI information of a core ring where the second gateway is located in the MPLS label1 field;
carrying layer-2 VNI information of the core ring where the second gateway is located in the MPLS label2 field;
carrying IP address information of the second gateway in the next-hop attribute; and
carrying MAC address information of the second access device in the "route MAC" extended attribute.

In an embodiment, carrying layer-2 forwarding information and layer-3 forwarding information of the second access device in the EVPN MAC/IP advertisement route of the second access device includes:
carrying an MAC address of the second access device in the MAC address field;
carrying an IP address of the second access device in the IP address field;
carrying layer-2 VNI information of a core ring where the second gateway is located in the MPLS label1 field;
carrying layer-3 VNI information of the core ring where the second gateway is located in the MPLS label2 field;
carrying IP address information of the second gateway in the next-hop attribute; and
carrying MAC address information of the second gateway in the "route MAC" extended attribute.

### Embodiment three

The embodiment of the present disclosure provides an apparatus for preventing traffic detour. The apparatus includes: a memory, a processor and a program for preventing traffic detour that is stored on the memory and executable by the processor. The program for preventing traffic detour, when executed by the processor, causes the processor to carry out the method for preventing traffic detour in Embodiment one.

### Embodiment four

The embodiment of the present disclosure provides a computer-readable storage medium storing a program for preventing traffic detour which, when executed by a processor, causes the processor to carry out the method for preventing traffic detour in Embodiment one.

### Example one

In the EVPN shown in FIG. 1, a first VXLAN tunnel end point (VTEP1) and a first gateway (GW1) belong to a first access ring (access ring 1). A first IRB (IRB1) interface is deployed at a first gateway. A first access device (virtual machine 1 (VM1)) accesses the first access ring. A second VXLAN tunnel end point (VTEP2) and a second gateway (GW2) belong to a second access ring (access ring 2). A second IRB (IRB2) interface is deployed at a second gateway. A second access device (virtual machine 2 (VM2)) accesses the second access ring. A third VXLAN tunnel end point (VTEP3) and a third gateway (GW3) belong to a third access ring (access ring 3). A third IRB (IRB3) interface is deployed at a third gateway. A third access device (virtual machine 3 (VM3)) accesses the third access ring. GW1, GW2 and GW3 belong to the same core ring. VM1 and VM3 reside on the same network segment. A first VXLAN tunnel is between GW1 and VTEP1, a second VXLAN tunnel is between GW2 and VTEP2, and a third VXLAN tunnel is between GW3 and VTEP3.

When the second access device (VM2) may need to send a message to the first access device (VM1), by adopting the method for preventing traffic detour according to the present application, a detailed route of VM1 is generated on GW2. The message can be directly sent to the first gateway GW1 of the first access ring without detouring other gateways (for example, GW3).

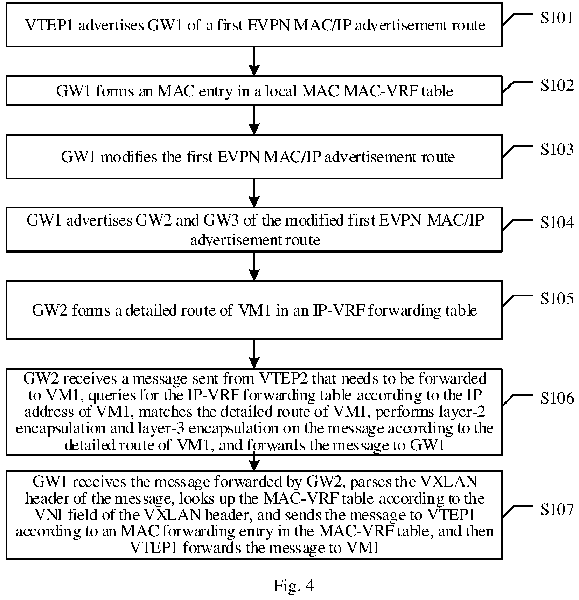

As shown in FIG. 4, a method for preventing traffic detour may include the following steps of S101 to S107.

At S101, VTEP1 advertises GW1 of a first EVPN MAC/IP advertisement route. The first EVPN MAC/IP advertisement route includes: MAC address information of VM1 carried in an MAC address field, IP address information of VM1 carried in an IP address field, layer-2 VNI information of a first access ring carried in an MPLS label1 field, and IP address information of VTEP1 carried in a next-hop attribute.

At S102, GW1 receives the first EVPN MAC/IP advertisement route, and forms an MAC entry in a local MAC Virtual Routing Forwarding (MAC-VRF) table.

GW1 determines that the first EVPN MAC/IP advertisement route carries an MPLS label1 but does not carry an MPLS label2, and forms the MAC entry in the local MAC-VRF table.

A value of a destination MAC field of the MAC entry is set to an MAC address of VM1, and a value of an outgoing interface field of the MAC entry is set to a first VXLAN tunnel from GW1 to VTEP1. A destination IP address of the first VXLAN tunnel is an IP of VTEP1. A VNI of the first VXLAN tunnel is a layer-2 VNI of the first access ring.

At S103, GW1 modifies the first EVPN MAC/IP advertisement route. The modified first EVPN MAC/IP advertisement route includes: MAC address information of VM1 carried in the MAC address field, IP address information of VM1 carried in the IP address field, layer-2 VNI information of a core ring carried in the MPLS label1 field, layer-2 VNI information of the core ring carried in an MPLS label2 field, IP address information of GW1 carried in the next-hop attribute, and MAC address information of VM1 carried in a "route MAC" extended attribute.

The MPLS label2 field is an example field. If the EVPN MAC/IP advertisement route carries the MPLS label2 field, a receiver of the advertisement route generates a detailed route in an IP-VRF table.

At S104, GW1 advertises GW2 and GW3 of the modified first EVPN MAC/IP advertisement route.

At S105, GW2 receives the first EVPN MAC/IP advertisement route advertised from GW1, and forms a detailed route of VM1 in an IP-VRF forwarding table.

In the detailed route of VM1, a destination IP address is set to a value of an IP address field of the first EVPN MAC/IP advertisement route (i.e., an IP address of VM1), a value of a next hop is an IP address of GW1 (i.e., an IP address of IRB1), an outgoing interface is a VXLAN tunnel from GW2 to GW1, and a VNI of the VXLAN tunnel from GW2 to GW1 is a layer-2 VNI of the core ring (that is, a value of the MPLS Label2 field of the first EVPN MAC/IP advertisement route).

At S106, GW2 receives a message sent from VTEP2 that may be forwarded to VM1, queries for the IP-VRF forwarding table according to the IP address of VM1, matches the detailed route of VM1, performs layer-2 encapsulation and layer-3 encapsulation on the message according to the detailed route of VM1, and forwards the message to GW1.

An inner MAC header is encapsulated for an original message. A destination MAC field of the inner MAC header is set to the MAC address of VM1, and a source MAC field is set to the MAC address of GW2. Then, a VXLAN header is encapsulated, and a VNI field of the VXLAN header is set to the layer-2 VNI of the core ring. Then, an outer IP header is encapsulated. A destination IP field of the outer IP header is set to the IP address of GW1.

At S107, GW1 receives the message forwarded by GW2, parses the VXLAN header of the message, looks up the MAC-VRF table according to the VNI field of the VXLAN header, and sends the message to VTEP1 according to an MAC forwarding entry in the MAC-VRF table, and then VTEP1 forwards the message to VM1.

In Example one, after GW2 receives the first EVPN MAC/IP advertisement route advertised by GW1, a detailed route of VMI is generated. According to the detailed route of VM1, a message whose destination address is VM1 can be directly forwarded to GW1 without traffic-detouring other gateways.

### Example two

In the EVPN shown in FIG. 1, a first VXLAN tunnel end point (VTEP1) and a first gateway (GW1) belong to a first access ring (access ring 1). A first IRB (IRB1) interface is deployed at a first gateway. A first access device (virtual machine 1 (VM1)) accesses the first access ring. A second VXLAN tunnel end point (VTEP2) and a second gateway (GW2) belong to a second access ring (access ring 2). A second IRB (IRB2) interface is deployed at a second gateway. A second access device (virtual machine 2 (VM2)) accesses the second access ring. A third VXLAN tunnel end point (VTEP3) and a third gateway (GW3) belong to a third access ring (access ring 3). A third IRB (IRB3) interface is deployed at a third gateway. A third access device (virtual machine 3 (VM3)) accesses the third access ring. GW1, GW2 and GW3 belong to the same core ring. VM1 and VM3 reside on the same network segment. A first VXLAN tunnel is between GW1 and VTEP1, a second VXLAN tunnel is between GW2 and VTEP2, and a third VXLAN tunnel is between GW3 and VTEP3.

When the second access device (VM2) may need to send a message to the first access device (VM1), by adopting the method for preventing a traffic detour according to the present application, a detailed route of VM1 is generated on GW2. The message can be directly sent to the first gateway GW1 of the first access ring without detouring other gateways (for example, GW3).

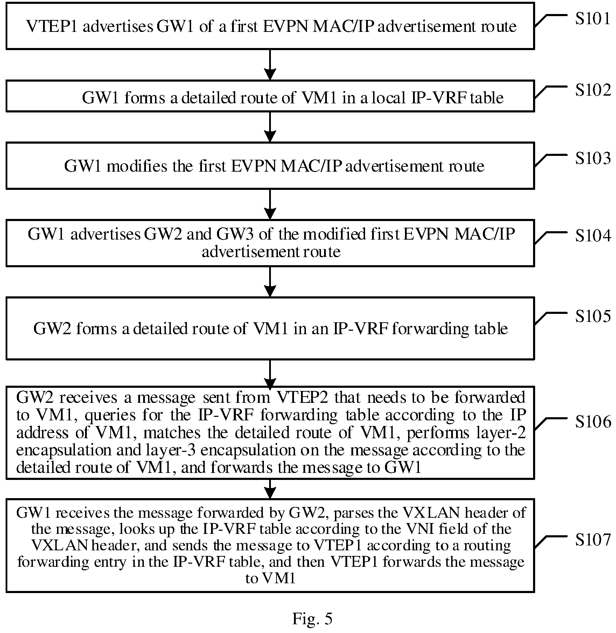

As shown in FIG. 5, a method for preventing a traffic detour may include steps S101 to S107.

At S101, VTEP1 advertises GW1 of a first EVPN MAC/IP advertisement route. The first EVPN MAC/IP advertisement route includes: MAC address information of VM1 carried in an MAC address field, IP address information of VM1 carried in an IP address field, layer-2 VNI information of a first access ring carried in an MPLS label1 field, layer-2 VNI information of the first access ring carried in an MPLS label2 field, IP address information of GW1 carried in a next-hop attribute, and MAC address information of VM1 carried in a "route MAC" extended attribute.

At S102, GW1 receives the first EVPN MAC/IP advertisement route, and forms a detailed route of VM1 in a local IP-VRF table.

GW1 determines that the first EVPN MAC/IP advertisement route carries both an MPLS label1 and an MPLS label2, and forms a detailed route of VM1 in a local IP-VRF table.

In the detailed route of VM1, a destination IP address is set to a value of an IP address field of the first EVPN MAC/IP advertisement route (i.e., an IP address of VM1), a value of a next hop is an IP address of VTEP1, an outgoing interface is a first VXLAN tunnel from GW1 to VTEP1, and a VNI of the first VXLAN tunnel is a layer-2 VNI of the first access ring (that is, a value of the MPLS Label2 field of the first EVPN MAC/IP advertisement route).

At S103, GW1 modifies the first EVPN MAC/IP advertisement route. The modified first EVPN MAC/IP advertisement route includes: MAC address information of VM1 carried in the MAC address field, IP address information of VM1 carried in the IP address field, layer-2 VNI information of a core ring carried in the MPLS label1 field, layer-3 VNI information of the core ring carried in the MPLS label2 field, IP address information of GW1 carried in the next-hop attribute, and MAC address information of GW1 carried in the "route MAC" extended attribute.

At S104, GW1 advertises GW2 and GW3 of the modified first EVPN MAC/IP advertisement route.

At S105, GW2 receives the first EVPN MAC/IP advertisement route advertised from GW1, and forms a detailed route of VM1 in an IP-VRF forwarding table.

In the detailed route of VM1, a destination IP address is set to a value of an IP address field of the first EVPN MAC/IP advertisement route (i.e., an IP address of VM1), a value of a next hop is an IP address of GW1 (i.e., an IP address of IRB1), an outgoing interface is a VXLAN tunnel from GW2 to GW1, and a VNI of the VXLAN tunnel from GW2 to GW1 is a layer-3 VNI of the core ring (that is, a value of the MPLS Label2 field of the first EVPN MAC/IP advertisement route).

At S106, GW2 receives a message sent from VTEP2 that may be forwarded to VM1, queries for the IP-VRF forwarding table according to the IP address of VM1, matches the detailed route of VM1, performs layer-2 encapsulation and layer-3 encapsulation on the message according to the detailed route of VM1, and forwards the message to GW1.

An inner MAC header is encapsulated for an original message. A destination MAC field of the inner MAC header is set to the MAC address of VM1, and a source MAC field is set to the MAC address of GW2. Then, a VXLAN header is encapsulated, and a VNI field of the VXLAN header is set to the layer-3 VNI of the core ring. Then, an outer IP header is encapsulated. A destination IP field of the outer IP header is set to the IP address of GW1.

At S107, GW1 receives the message forwarded by GW2, parses the VXLAN header of the message, looks up the IP-VRF table according to the VNI field of the VXLAN header, and sends the message to VTEP1 according to a routing forwarding entry in the IP-VRF table, and then VTEP1 forwards the message to VM1.

In Example two, after GW2 receives the first EVPN MAC/IP advertisement route advertised by GW1, a detailed route of VMI is generated. According to the detailed route of VM1, a message whose destination address is VM1 can be directly forwarded to GW1 without traffic-detouring other gateways.

Those having ordinary skills in the art may understand that all or some of the steps in the method and functional modules/units in the systems and the apparatuses disclosed above may be implemented as software, firmware, hardware, and appropriate combinations thereof. In a hardware embodiment, the division between the functional modules/units mentioned in the above description does not necessarily correspond to the division of physical components. For example, one physical component may have multiple functions, or one function or step may be jointly performed by a plurality of physical components. Some or all of the physical components may be implemented as software executed by a processor such as a central processing unit, a digital signal processor or a microprocessor, or may be implemented as hardware or an integrated circuit such as an application-specific integrated circuit. Such software may be distributed on a computer-readable medium, which may include a computer storage medium (or a non-transitory medium) and a communication medium (or a transitory medium). As is well known to those having ordinary skills in the art, the term "computer storage medium" includes volatile and nonvolatile, removable and non-removable media implemented in any method or technology for storing information (such as computer-readable instructions, data structures, program modules, or other data). The computer storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital versatile disk (DVD) or other optical storage, magnetic cassette, magnetic tape, magnetic disk storage or other magnetic storage apparatuses, or any other media that can be configured for storing desired information and can be accessed by a computer. Furthermore, as is well known to those having ordinary skills in the art, the communication medium typically includes computer-readable instructions, data structures, program modules or other data in a modulated data signal such as a carrier wave or other transport mechanisms, and may include any information delivery medium.

### Industrial Applicability

In the method and apparatus for preventing traffic detour according to the embodiments of the present disclosure, a first gateway advertises to other gateways of the EVPN, an EVPN MAC/IP advertisement route of a first access device in a first access ring where the gateway is located, the EVPN MAC/IP advertisement route of the first access device carrying layer-2 forwarding information and layer-3 forwarding information of the first access device; receives an EVPN MAC/IP advertisement route of a second access device in a second access ring advertised by a second gateway in the second access ring, and generates a detailed route of the second access device having more mask bits than a network segment route according to layer-2 forwarding information and layer-3 forwarding information of the second access device carried in the EVPN MAC/IP advertisement route of the second access device; and when forwarding a message to the second access device, performs layer-2 encapsulation and layer-3 encapsulation on the message according to the detailed route of the second access device, and forwards the encapsulated message to the second gateway. The technical scheme of the present disclosure can prevent traffic detour when communication is performed across access rings of an EVPN, and improve transmission efficiency.

## Claims

1. A method for preventing traffic detour, applied to a gateway of an Ethernet Virtual Private Network, EVPN, the method comprising:
advertising (S210) to other gateways of the EVPN, an EVPN Media Access Control, MAC,/Internet Protocol, IP, advertisement route of a first access device in a first access ring where the gateway is located, the EVPN MAC/IP advertisement route of the first access device carrying layer-2 forwarding information and layer-3 forwarding information of the first access device;
receiving (S220) an EVPN MAC/IP advertisement route of a second access device in a second access ring advertised by a second gateway in the second access ring, and generating a detailed route of the second access device having more mask bits than a network segment route according to layer-2 forwarding information and layer-3 forwarding information of the second access device carried in the EVPN MAC/IP advertisement route of the second access device; and
in response to forwarding a message to the second access device, performing (S230) layer-2 encapsulation and layer-3 encapsulation on the message according to the detailed route of the second access device, and forwarding the encapsulated message to the second gateway;
prior to advertising (S210) to other gateways of the EVPN, an EVPN MAC/IP advertisement route of a first access device in a first access ring where the gateway is located, the method further comprises:
receiving an EVPN MAC/IP advertisement route of the first access device advertised by a first Virtual Extensible Local Area Network Tunnel End Point, VTEP, of the first access ring;
wherein the EVPN MAC/IP advertisement route of the first access device carries the following information:
MAC address information of the first access device carried in an MAC address field; IP address information of the first access device carried in an IP address field; layer-2 Virtual Extensible Local Area Network, VXLAN, identifier, VNI, information of the first access ring carried in a Multi-Protocol Label Switching, MPLS, label1 field; and IP address information of the first VTEP carried in a next-hop attribute;
**characterized by**
advertising (S210) to other gateways of the EVPN, an EVPN MAC/IP advertisement route of a first access device in a first access ring where the gateway is located comprises:
modifying the EVPN MAC/IP advertisement route of the first access device advertised by the first VTEP, and advertising to the other gateways of the EVPN, the modified EVPN MAC/IP advertisement route of the first access device;
wherein the modifying comprises the following content: modifying the MPLS label1 field to carry layer-2 VNI information of a core ring where the gateway is located, wherein an access ring is a network established by devices at an access layer and an aggregation layer through annular networking, a core ring is a network established by devices at a core layer and an aggregation layer through annular networking, the aggregation layer is located between the access layer and the core layer and acts as a communication bridge between the access layer and the core layer; carrying layer-2 VNI information of the core ring where the gateway is located in an MPLS label2 field; modifying the next-hop attribute to carry IP address information of the gateway; and adding a "route MAC" extended attribute, and carrying the MAC address information of the first access device in the "route MAC" extended attribute.

2. The method of claim 1, wherein the EVPN MAC/IP advertisement route of the first access device carries the following additional information: layer-2 VNI information of the first access ring carried in an MPLS label2 field and MAC address information of the first access device carried in the "route MAC" extended attribute.

3. The method of claim 2, wherein modifying the EVPN MAC/IP advertisement route of the first access device advertised by the first VTEP further comprises:
modifying an MPLS label2 field to carry layer-3 VNI information of the core ring where the gateway is located; modifying the value of a next-hop attribute to carry IP address information of the gateway; and modifying the value of a "route MAC" extended attribute to carry MAC address information of the gateway.

4. The method of claim 1, wherein
carrying layer-2 forwarding information and layer-3 forwarding information of the second access device in the EVPN MAC/IP advertisement route of the second access device comprises:
carrying an MAC address of the second access device in the MAC address field;
carrying an IP address of the second access device in the IP address field;
carrying layer-2 VNI information of a core ring where the second gateway is located in the MPLS label1 field;
carrying layer-2 VNI information of the core ring where the second gateway is located in the MPLS label2 field;
carrying IP address information of the second gateway in the next-hop attribute; and
carrying MAC address information of the second access device in the "route MAC" extended attribute.

5. The method of claim 1 or 2 or 3, wherein
carrying layer-2 forwarding information and layer-3 forwarding information of the second access device in the EVPN MAC/IP advertisement route of the second access device comprises:
carrying an MAC address of the second access device in the MAC address field;
carrying an IP address of the second access device in the IP address field;
carrying layer-2 VNI information of a core ring where the second gateway is located in the MPLS label1 field;
carrying layer-3 VNI information of the core ring where the second gateway is located in the MPLS label2 field;
carrying IP address information of the second gateway in the next-hop attribute; and
carrying MAC address information of the second gateway in the "route MAC" extended attribute.

6. An apparatus for preventing traffic detour, applied to a gateway of an Ethernet Virtual Private Network, EVPN, the apparatus comprising:
a route advertisement module (10) configured to advertise to other gateways of the EVPN, an EVPN Media Access Control, MAC,/Internet Protocol, IP, advertisement route of a first access device in a first access ring where the gateway is located, the EVPN MAC/IP advertisement route of the first access device carrying layer-2 forwarding information and layer-3 forwarding information of the first access device;
a detailed route generation module (20) configured to receive an EVPN MAC/IP advertisement route of a second access device in a second access ring advertised by a second gateway in the second access ring, and generate a detailed route of the second access device having more mask bits than a network segment route according to layer-2 forwarding information and layer-3 forwarding information of the second access device carried in the EVPN MAC/IP advertisement route of the second access device; and
a message forwarding module (30) configured to, in response to forwarding a message to the second access device, perform layer-2 encapsulation and layer-3 encapsulation on the message according to the detailed route of the second access device, and forward the encapsulated message to the second gateway;
prior to advertise to other gateways of the EVPN, an EVPN MAC/IP advertisement route of a first access device in a first access ring where the gateway is located, the route advertisement module (10) is configured to:
receive an EVPN MAC/IP advertisement route of the first access device advertised by a first Virtual Extensible Local Area Network Tunnel End Point, VTEP, of the first access ring;
wherein the EVPN MAC/IP advertisement route of the first access device carries the following information:
MAC address information of the first access device carried in an MAC address field; IP address information of the first access device carried in an IP address field; layer-2 Virtual Extensible Local Area Network, VXLAN, identifier, VNI, information of the first access ring carried in a Multi-Protocol Label Switching, MPLS, label 1 field; and IP address information of the first VTEP carried in a next-hop attribute;
**characterized in that**,
advertising to other gateways of the EVPN, an EVPN MAC/IP advertisement route of a first access device in a first access ring where the gateway is located comprises:
modifying the EVPN MAC/IP advertisement route of the first access device advertised by the first VTEP, and advertising to the other gateways of the EVPN, the modified EVPN MAC/IP advertisement route of the first access device;
wherein the modifying comprises the following content: modifying the MPLS label1 field to carry layer-2 VNI information of a core ring where the gateway is located, wherein an access ring is a network established by devices at an access layer and an aggregation layer through annular networking, a core ring is a network established by devices at a core layer and an aggregation layer through annular networking, the aggregation layer is located between the access layer and the core layer and acts as a communication bridge between the access layer and the core layer; carrying layer-2 VNI information of the core ring where the gateway is located in an MPLS label2 field; modifying the next-hop attribute to carry IP address information of the gateway; and adding a "route MAC" extended attribute, and carrying the MAC address information of the first access device in the "route MAC" extended attribute.

7. A computer-readable storage medium comprising instructions to cause the apparatus of claim 6 to execute all the steps of the method according to any of claims 1 to 5.

## Patentansprüche

1. Verfahren zum Verhindern einer Verkehrsumleitung, angewandt auf ein Gateway eines virtuellen privaten Ethernet-Netzwerks, EVPN, das Verfahren umfassend:
Ankündigen (S210), anderen Gateways des EVPN, einer EVPN-Medienzugangssteuerung- bzw. -MAC/Internetprotokoll- bzw. -IP-Ankündigungsroute einer ersten Zugangsvorrichtung in einem ersten Zugangsring, in dem das Gateway angeordnet ist, wobei die EVPN-MAC/IP-Ankündigungsroute der ersten Zugangsvorrichtung Schicht-2-Weiterleitungsinformationen und Schicht-3-Weiterleitungsinformationen der ersten Zugangsvorrichtung trägt;
Empfangen (S220) einer EVPN-MAC/IP-Ankündigungsroute einer zweiten Zugangsvorrichtung in einem zweiten Zugangsring, angekündigt durch ein zweites Gateway in dem zweiten Zugangsring, und Erzeugen einer detaillierten Route der zweiten Zugangsvorrichtung mit mehr Maskenbits als eine Netzwerksegmentroute gemäß Schicht-2-Weiterleitungsinformationen und Schicht-3-Weiterleitungsinformationen der zweiten Zugangsvorrichtung, getragen in der EVPN-MAC/IP-Ankündigungsroute der zweiten Zugangsvorrichtung; und
als Reaktion auf Weiterleiten einer Nachricht an die zweite Zugangsvorrichtung Durchführen (S230) von Schicht-2-Verkapselung und Schicht-3-Verkapselung an der Nachricht gemäß der detaillierten Route der zweiten Zugangsvorrichtung und Weiterleiten der verkapselten Nachricht an das zweite Gateway;
wobei das Verfahren vor dem Ankündigen (S210), anderen Gateways des EVPN, einer EVPN-MAC/IP-Ankündigungsroute einer ersten Zugangsvorrichtung in einem ersten Zugangsring, in dem das Gateway angeordnet ist, ferner umfasst:
Empfangen einer EVPN-MAC/IP-Ankündigungsroute der ersten Zugangsvorrichtung, angekündigt durch einen ersten Tunnelendpunkt eines virtuellen erweiterbaren Nahbereichsnetzwerks, VTEP, des ersten Zugangsrings;
wobei die EVPN-MAC/IP-Ankündigungsroute der ersten Zugangsvorrichtung die folgenden Informationen trägt:
MAC-Adressinformationen der ersten Zugangsvorrichtung, getragen in einem MAC-Adressfeld; IP-Adressinformationen der ersten Zugangsvorrichtung, getragen in einem IP-Adressfeld; Kennungs- bzw. VNI-Informationen des virtuellen erweiterbaren Schicht-2-Nahbereichsnetzwerks, VXLAN, des ersten Zugangsrings, getragen in einem Mehrfachprotokoll-Etikettvermittlung- bzw. MPLS-labell-Feld; und IP-Adressinformationen der ersten VTEP, getragen in einem Nächster-Sprung-Attribut;
**gekennzeichnet dadurch, dass**
Ankündigen (S210), anderen Gateways des EVPN, einer EVPN-MAC/IP-Ankündigungsroute einer ersten Zugangsvorrichtung in einem ersten Zugangsring, in dem das Gateway angeordnet ist, umfasst:
Modifizieren der EVPN-MAC/IP-Ankündigungsroute der ersten Zugangsvorrichtung, angekündigt durch den ersten VTEP, und Ankündigen, den anderen Gateways des EVPN, der modifizierten EVPN-MAC/IP-Ankündigungsroute der ersten Zugangsvorrichtung;
wobei das Modifizieren den folgenden Inhalt umfasst: Modifizieren des MPLS-labell-Felds, Schicht-2-VNI-Informationen eines Kernrings, in dem das Gateway angeordnet ist, zu tragen, wobei ein Zugangsring ein Netzwerk ist, eingerichtet durch Vorrichtungen an einer Zugangsschicht und einer Aggregationsschicht durch ringförmige Vernetzung, ein Kernring ein Netzwerk ist, eingerichtet durch Vorrichtungen an einer Kernschicht und einer Aggregationsschicht durch ringförmige Vernetzung, die Aggregationsschicht zwischen der Zugangsschicht und der Kernschicht angeordnet ist und als eine Kommunikationsbrücke zwischen der Zugangsschicht und der Kernschicht fungiert; Tragen von Schicht-2-VNI-Informationen des Kernrings, in dem das Gateway angeordnet ist, in einem MPLS-label2-Feld; Modifizieren des Nächster-Sprung-Attributs, IP-Adressinformationen des Gateways zu tragen; und Hinzufügen eines erweiterten "Route MAC"-Attributs und Tragen der MAC-Adressinformationen der ersten Zugangsvorrichtung in dem erweiterten "Route MAC"-Attribut.

2. Verfahren nach Anspruch 1, wobei
die EVPN-MAC/IP-Ankündigungsroute der ersten Zugangsvorrichtung die folgenden zusätzlichen Informationen trägt:
Schicht-2-VNI-Informationen des ersten Zugangsrings, getragen in einem MPLS-label2-Feld, und MAC-Adressinformationen der ersten Zugangsvorrichtung, getragen in dem erweiterten "Route MAC"-Attribut.

3. Verfahren nach Anspruch 2, wobei
Modifizieren der EVPN-MAC/IP-Ankündigungsroute der ersten Zugangsvorrichtung, angekündigt durch den ersten VTEP, ferner umfasst:
Modifizieren eines MPLS-label2-Feld, Schicht-3-VNI-Informationen des Kernrings, in dem das Gateway angeordnet ist, zu tragen; Modifizieren des Werts eines Nächster-Sprung-Attributs, IP-Adressinformationen des Gateways zu tragen; und Modifizieren des Werts eines erweiterten "Route MAC"-Attributs, MAC-Adressinformationen des Gateways zu tragen.

4. Verfahren nach Anspruch 1, wobei
Tragen von Schicht-2-Weiterleitungsinformationen und Schicht-3-Weiterleitungsinformationen der zweiten Zugangsvorrichtung in der EVPN-MAC/IP-Ankündigungsroute der zweiten Zugangsvorrichtung umfasst:
Tragen einer MAC-Adresse der zweiten Zugangsvorrichtung in dem MAC-Adressfeld;
Tragen einer IP-Adresse der zweiten Zugangsvorrichtung in dem IP-Adressfeld;
Tragen von Schicht-2-VNI-Informationen eines Kernrings, in dem das zweite Gateway angeordnet ist, in dem MPLS-labell-Feld;
Tragen von Schicht-2-VNI-Informationen des Kernrings, in dem das zweite Gateway angeordnet ist, in dem MPLS-label2-Feld;
Tragen von IP-Adressinformationen des zweiten Gateways in dem Nächster-Sprung-Attribut; und
Tragen von MAC-Adressinformationen der zweiten Zugangsvorrichtung in dem erweiterten "Route MAC"-Attribut.

5. Verfahren nach Anspruch 1 oder 2 oder 3, wobei
Tragen von Schicht-2-Weiterleitungsinformationen und Schicht-3-Weiterleitungsinformationen der zweiten Zugangsvorrichtung in der EVPN-MAC/IP-Ankündigungsroute der zweiten Zugangsvorrichtung umfasst:
Tragen einer MAC-Adresse der zweiten Zugangsvorrichtung in dem MAC-Adressfeld;
Tragen einer IP-Adresse der zweiten Zugangsvorrichtung in dem IP-Adressfeld;
Tragen von Schicht-2-VNI-Informationen eines Kernrings, in dem das zweite Gateway angeordnet ist, in dem MPLS-labell-Feld;
Tragen von Schicht-3-VNI-Informationen des Kernrings, in dem das zweite Gateway angeordnet ist, in dem MPLS-label2-Feld;
Tragen von IP-Adressinformationen des zweiten Gateways in dem Nächster-Sprung-Attribut; und
Tragen von MAC-Adressinformationen des zweiten Gateways in dem erweiterten "Route MAC"-Attribut.

6. Gerät zum Verhindern einer Verkehrsumleitung, angewandt auf ein Gateway eines virtuellen privaten Ethernet-Netzwerks, EVPN, das Gerät umfassend:
ein Routenankündigungsmodul (10), konfiguriert zum Ankündigen, anderen Gateways des EVPN, einer EVPN-Medienzugangssteuerung- bzw. -MAC/Internetprotokoll- bzw. -IP-Ankündigungsroute einer ersten Zugangsvorrichtung in einem ersten Zugangsring, in dem das Gateway angeordnet ist, wobei die EVPN-MAC/IP-Ankündigungsroute der ersten Zugangsvorrichtung Schicht-2-Weiterleitungsinformationen und Schicht-3-Weiterleitungsinformationen der ersten Zugangsvorrichtung trägt;
ein Modul zum Erzeugen einer detaillierten Route (20), konfiguriert zum Empfangen einer EVPN-MAC/IP-Ankündigungsroute einer zweiten Zugangsvorrichtung in einem zweiten Zugangsring, angekündigt durch ein zweites Gateway in dem zweiten Zugangsring, und Erzeugen einer detaillierten Route der zweiten Zugangsvorrichtung mit mehr Maskenbits als eine Netzwerksegmentroute gemäß Schicht-2-Weiterleitungsinformationen und Schicht-3-Weiterleitungsinformationen der zweiten Zugangsvorrichtung, getragen in der EVPN-MAC/IP-Ankündigungsroute der zweiten Zugangsvorrichtung; und
ein Nachrichtenweiterleitungsmodul (30), konfiguriert zum, als Reaktion auf Weiterleiten einer Nachricht an die zweite Zugangsvorrichtung, Durchführen von Schicht-2-Verkapselung und Schicht-3-Verkapselung an der Nachricht gemäß der detaillierten Route der zweiten Zugangsvorrichtung und Weiterleiten der verkapselten Nachricht an das zweite Gateway;
wobei das Routenankündigungsmodul (10) vor dem Ankündigen, anderen Gateways des EVPN, einer EVPN-MAC/IP-Ankündigungsroute einer ersten Zugangsvorrichtung in einem ersten Zugangsring, in dem das Gateway angeordnet ist, konfiguriert ist zum:
Empfangen einer EVPN-MAC/IP-Ankündigungsroute der ersten Zugangsvorrichtung, angekündigt durch einen ersten Tunnelendpunkt eines virtuellen erweiterbaren Nahbereichsnetzwerks, VTEP, des ersten Zugangsrings;
wobei die EVPN-MAC/IP-Ankündigungsroute der ersten Zugangsvorrichtung die folgenden Informationen trägt:
MAC-Adressinformationen der ersten Zugangsvorrichtung, getragen in einem MAC-Adressfeld; IP-Adressinformationen der ersten Zugangsvorrichtung, getragen in einem IP-Adressfeld; Kennungs- bzw. VNI-Informationen des virtuellen erweiterbaren Schicht-2-Nahbereichsnetzwerks, VXLAN, des ersten Zugangsrings, getragen in einem Mehrfachprotokoll-Etikettvermittlung- bzw. MPLS-label1-Feld; und IP-Adressinformationen der ersten VTEP, getragen in einem Nächster-Sprung-Attribut;
**dadurch gekennzeichnet, dass**
Ankündigen, anderen Gateways des EVPN, einer EVPN-MAC/IP-Ankündigungsroute einer ersten Zugangsvorrichtung in einem ersten Zugangsring, in dem das Gateway angeordnet ist, umfasst:
Modifizieren der EVPN-MAC/IP-Ankündigungsroute der ersten Zugangsvorrichtung, angekündigt durch den ersten VTEP, und Ankündigen, den anderen Gateways des EVPN, der modifizierten EVPN-MAC/IP-Ankündigungsroute der ersten Zugangsvorrichtung;
wobei das Modifizieren den folgenden Inhalt umfasst: Modifizieren des MPLS-label1-Felds, Schicht-2-VNI-Informationen eines Kernrings, in dem das Gateway angeordnet ist, zu tragen, wobei ein Zugangsring ein Netzwerk ist, eingerichtet durch Vorrichtungen an einer Zugangsschicht und einer Aggregationsschicht durch ringförmige Vernetzung, ein Kernring ein Netzwerk ist, eingerichtet durch Vorrichtungen an einer Kernschicht und einer Aggregationsschicht durch ringförmige Vernetzung, wobei die Aggregationsschicht zwischen der Zugangsschicht und der Kernschicht angeordnet ist und als eine Kommunikationsbrücke zwischen der Zugangsschicht und der Kernschicht fungiert; Tragen von Schicht-2-VNI-Informationen des Kernrings, in dem das Gateway angeordnet ist, in einem MPLS-label2-Feld; Modifizieren des Nächster-Sprung-Attributs, IP-Adressinformationen des Gateways zu tragen; und Hinzufügen eines erweiterten "Route MAC"-Attributs und Tragen der MAC-Adressinformationen der ersten Zugangsvorrichtung in dem erweiterten "Route MAC"-Attribut.

7. Computerlesbares Speichermedium, umfassend Anweisungen, um das Gerät nach Anspruch 6 zu veranlassen, sämtliche der Schritte des Verfahrens nach einem der Ansprüche 1 bis 5 auszuführen.

## Revendications

1. Procédé pour empêcher le détournement du trafic, appliqué à une passerelle d'un réseau privé virtuel Ethernet, EVPN, ce procédé comprenant :
l'annonce (S210), à d'autres passerelles du réseau EVPN, d'une voie d'acheminement d'annonce EVPN MAC (contrôle d'accès au support)/IP (Protocole Internet) d'un premier périphérique d'accès dans un premier anneau d'accès où la passerelle est située, cette voie d'acheminement d'annonce EVPN MAC/IP du premier périphérique d'accès acheminant des informations de réacheminement de couche 2 et des informations de réacheminement de couche 3 du premier périphérique d'accès ;
la réception (S220) d'une voie d'acheminement d'annonce EVPN MAC/IP d'un deuxième périphérique d'accès dans un deuxième anneau d'accès annoncée par une deuxième passerelle dans le deuxième anneau d'accès, et la génération d'une voie d'acheminement détaillée du deuxième périphérique d'accès ayant plus de bits de masque qu'une voie d'acheminement de segment de réseau conformément aux informations de réacheminement de couche 2 et aux informations de réacheminement de couche 3 du deuxième périphérique d'accès acheminées dans la voie d'acheminement d'annonce EVPN MAC/IP du deuxième périphérique d'accès ; et
en réponse au réacheminement d'un message au deuxième périphérique d'accès, l'exécution (S230) d'une encapsulation de couche 2 et d'une encapsulation de couche 3 sur le message conformément à la voie d'acheminement détaillée du deuxième périphérique d'accès, et le réacheminement du message encapsulé à la deuxième passerelle ;
avant l'annonce (S210), à d'autres passerelles du réseau EVPN, d'une voie d'acheminement d'annonce EVPN MAC/IP d'un premier périphérique d'accès dans un premier anneau d'accès où la passerelle est située, ce procédé comprend en outre :
la réception d'une voie d'acheminement d'annonce EVPN MAC/IP du premier périphérique d'accès annoncée par un premier point d'extrémité de tunnel de réseau local extensible virtuel, VTEP, du premier anneau d'accès ;
la voie d'acheminement d'annonce EVPN MAC/IP du premier périphérique d'accès acheminant les informations suivantes :
des informations d'adresse MAC du premier périphérique d'accès acheminées dans un champ d'adresse MAC ; des informations d'adresse IP du premier périphérique d'accès acheminées dans un champ d'adresse IP ; des informations VPN d'identifiant de réseau local extensible virtuel de couche 2, VXLAN, des informations du premier anneau d'accès acheminées dans un champ d'étiquette 1 de commutation multi-protocole par étiquette, MPLS, et des informations d'adresse IP du premier point d'extrémité VTEP acheminées dans l'attribut Next Hop ;
**caractérisé en ce que**
l'annonce (S210), à d'autres passerelles du réseau EVPN, d'une voie d'acheminement d'annonce EVPN MAC/IP d'un premier périphérique d'accès dans un premier anneau d'accès où la passerelle est située comprend :
la modification de la voie d'acheminement d'annonce EVPN MAC/IP du premier périphérique d'accès annoncée par le premier point d'extrémité VTEP, et l'annonce aux autres passerelles du réseau EVPN de la voie d'acheminement d'annonce EVPN MAC/IP modifiée du premier périphérique d'accès ;
cette modification comprenant le contenu suivant : la modification du champ d'étiquette 1 MPLS pour acheminer des informations VNI de couche 2 d'un anneau central où la passerelle est située, un anneau d'accès étant un réseau établi par des périphériques à une couche d'accès et à une couche d'agrégation au moyen d'une mise en réseau annulaire, un anneau central étant un réseau établi par des périphériques à une couche centrale et à une couche d'agrégation au moyen d'une mise en réseau annulaire, la couche d'agrégation étant située entre la couche d'accès et la couche centrale et agissant comme un pont de communication entre la couche d'accès et la couche centrale ; l'acheminement d'informations VNI de couche 2 de l'anneau central où la passerelle est située dans un champ d'étiquette 2 MPLS ; la modification de l'attribut Next Hop pour acheminer les informations d'adresse IP de la passerelle ; et l'addition d'un attribut étendu « route MAC », et l'acheminement des informations d'adresse MAC du premier périphérique d'accès dans l'attribut étendu « route MAC ».

2. Procédé selon la revendication 1, dans lequel
la voie d'acheminement d'annonce EVPN MAC/IP du premier périphérique d'accès achemine les informations supplémentaires suivantes :
des informations VNI de couche 2 du premier anneau d'accès acheminées dans un champ d'étiquette 2 MPLS et des informations d'adresse MAC du premier périphérique d'accès acheminées dans l'attribut étendu « route MAC ».

3. Procédé selon la revendication 2, dans lequel
la modification de la voie d'acheminement d'annonce EVPN MAC/IP du premier anneau d'accès annoncée par le premier point d'extrémité VTEP comprend :
la modification d'un champ d'étiquette 2 MPLS pour acheminer des informations VNI de couche 3 de l'anneau central où la passerelle est située ;
la modification de la valeur d'un attribut Next Hop pour acheminer des informations d'adresse IP de la passerelle ; et
la modification de la valeur d'un attribut étendu « route MAC » pour acheminer des informations d'adresse MAC de la passerelle.

4. Procédé selon la revendication 1, dans lequel
l'acheminement des informations de réacheminement de couche 2 et des informations de réacheminement de couche 3 du deuxième périphérique d'accès dans la voie d'acheminement d'annonce EVPN MAC/IP du deuxième périphérique d'accès comprend :
l'acheminement d'une adresse MAC du deuxième périphérique d'accès dans le champ d'adresse MAC ;
l'acheminement d'une adresse IP du deuxième périphérique d'accès dans le champ d'adresse IP ;
l'acheminement des informations VNI de couche 2 d'un anneau central où la deuxième passerelle est située dans le champ d'étiquette 1 MPLS ;
l'acheminement des informations VNI de couche 2 de l'anneau central où la deuxième passerelle est située dans le champ d'étiquette 2 MPLS ;
l'acheminement des informations d'adresse IP de la deuxième passerelle dans l'attribut Next Hop ; et
l'acheminement des informations d'adresse MAC du deuxième périphérique d'accès dans l'attribut étendu « route MAC ».

5. Procédé selon la revendication 1 ou 2 ou 3, dans lequel :
l'acheminement des informations de réacheminement de couche 2 et des informations de réacheminement de couche 3 du deuxième périphérique d'accès dans la voie d'acheminement d'annonce EVPN MAC/IP du deuxième périphérique d'accès comprend :
l'acheminement d'une adresse MAC du deuxième périphérique d'accès dans le champ d'adresse MAC ;
l'acheminement d'une adresse IP du deuxième périphérique d'accès dans le champ d'adresse IP ;
l'acheminement des informations VNI de couche 2 d'un anneau central où la deuxième passerelle est située dans le champ d'étiquette 1 MPLS ;
l'acheminement des informations VNI de couche 2 de l'anneau central où la deuxième passerelle est située dans le champ d'étiquette 2 MPLS ;
l'acheminement des informations d'adresse IP de la deuxième passerelle dans l'attribut Next Hop ; et
l'acheminement des informations d'adresse MAC de la deuxième passerelle dans l'attribut étendu « route MAC ».

6. Appareil pour empêcher le détournement du trafic, appliqué à une passerelle d'un réseau privé virtuel Ethernet, EVPN, cet appareil comprenant :
un module d'annonce de voie d'acheminement (10) configuré de façon à annoncer à d'autres passerelles du réseau EVPN une voie d'acheminement d'annonce EVPN MAC (contrôle d'accès au support)/IP (Protocole Internet) d'un premier dispositif d'accès dans un premier anneau d'accès où la passerelle est située, cette voie d'acheminement d'annonce EVPN MAC/IP du premier dispositif d'accès acheminant des informations de réacheminement de couche 2 et des informations de réacheminement de couche 3 du premier périphérique d'accès ;
un module de génération de voie d'acheminement détaillée (20) configuré de façon à recevoir une voie d'acheminement d'annonce EVPN MAC/IP d'un deuxième périphérique d'accès dans un deuxième anneau d'accès annoncée par une deuxième passerelle dans le deuxième anneau d'accès, et de façon à générer une voie d'acheminement détaillée du deuxième périphérique d'accès ayant plus de bits de masque qu'une voie d'acheminement de segment de réseau conformément aux informations de réacheminement de couche 2 et aux informations de réacheminement de couche 3 du deuxième périphérique d'accès acheminées dans la voie d'acheminement d'annonce EVPN MAC/IP du deuxième périphérique d'accès ; et
un module de réacheminement de message (30) configuré de façon à, en réponse au réacheminement d'un message au deuxième périphérique d'accès, exécuter une encapsulation de couche 2 et une encapsulation de couche 3 sur le message conformément à la voie d'acheminement détaillée du deuxième périphérique d'accès, et de façon à réacheminer le message encapsulé à la deuxième passerelle ;
avant l'annonce, à d'autres passerelles du réseau EVPN, d'une voie d'acheminement d'annonce EVPN MAC/IP d'un premier périphérique d'accès dans un premier anneau d'accès où la passerelle est située, le module d'annonce de voie d'acheminement (10) est configuré de façon à :
recevoir une voie d'acheminement d'annonce EVPN MAC/IP du premier périphérique d'accès annoncée par un premier point d'extrémité de tunnel de réseau local extensible virtuel, VTEP, du premier anneau d'accès ;
la voie d'acheminement d'annonce EVPN MAC/IP du premier périphérique d'accès acheminant les informations suivantes :
des informations d'adresse MAC du premier périphérique d'accès acheminées dans un champ d'adresse MAC ; des informations d'adresse IP du premier périphérique d'accès acheminées dans un champ d'adresse IP ; des informations VNI d'identifiant de réseau local extensible virtuel de couche 2, VXLAN, des informations du premier anneau d'accès acheminées dans un champ d'étiquette 1 de commutation multi-protocole par étiquette, MPLS ; et des informations d'adresse IP du premier point d'extrémité VTEP acheminées dans un attribut Next Hop ;
**caractérisé en ce que** :
l'annonce, à d'autres passerelles du réseau EVPN, d'une voie d'acheminement d'annonce EVPN MAC/IP d'un premier périphérique d'accès dans un premier anneau d'accès où la passerelle est située comprend :
la modification de la voie d'acheminement d'annonce EVPN MAC/IP du premier périphérique d'accès annoncée par le premier point d'extrémité VTEP, et l'annonce aux autres passerelles du réseau EVPN de la voie d'acheminement d'annonce EVPN MAC/IP modifiée du premier périphérique d'accès ;
cette modification comprenant le contenu suivant : la modification du champ d'étiquette 1 MPLS pour acheminer des informations VNI de couche 2 d'un anneau central où la passerelle est située, un anneau d'accès étant un réseau établi par des périphériques à une couche d'accès et à une couche d'agrégation au moyen d'une mise en réseau annulaire, un anneau central étant un réseau établi par des périphériques à une couche centrale et à une couche d'agrégation au moyen d'une mise en réseau annulaire, la couche d'agrégation étant située entre la couche d'accès et la couche centrale et agissant comme un pont de communication entre la couche d'accès et la couche centrale ; l'acheminement d'informations VNI de couche 2 de l'anneau central où la passerelle est située dans un champ d'étiquette 2 MPLS ; la modification de l'attribut Next Hop pour acheminer les informations d'adresse IP de la passerelle ; et l'addition d'un attribut étendu « route MAC », et l'acheminement des informations d'adresse MAC du premier périphérique d'accès dans l'attribut étendu « route MAC ».

7. Support de stockage lisible par ordinateur comprenant des instructions pour faire en sorte que l'appareil selon la revendication 6 exécute toutes les étapes du procédé selon l'une quelconque des revendications 1 à 5.
